# EUROPEAN PATENT SPECIFICATION

(11) **EP 2 184 521 B1**
(45) Date of publication and mention of the grant of the patent: **16.05.2012**
(21) Application number: 09175430.9
(22) Date of filing: 09.11.2009
(51) Int. Cl.: F16K 11/22

(54) **Distribution assembly**
Verteilungsanordnung
Ensemble de distribution

(30) Priority: 11.11.2008 IT MO20080288
(43) Date of publication of application: 12.05.2010
(73) Proprietor: Arag S.r.l., 42048 Rubiera (Reggio Emilia) (IT)
(72) Inventor: Puglia, Stefano, 42019 Scandiano (RE) (IT); Vernia, Marco, 42048 Rubiera (RE) (IT)
(74) Representative: Modiano, Micaela Nadia

(56) References cited:
- US-A- 2 775 261
- US-A- 4 570 677
- US-A- 5 934 327

## Description

The present invention relates to a distribution assembly for dispensing fluid for agricultural use, particularly aqueous suspensions or solutions of treatments for agricultural use.

Distribution assemblies for dispensing fluids for agricultural use, for example for dispensing aqueous suspensions or solutions of fertilizers, herbicides, or any aqueous suspension of treatments for agricultural use and the like, are known.

The distribution assemblies are connected hydraulically to a pump for dispensing a pressurized fluid, such pump being in turn associated with the engine of the agricultural vehicle used to spread such treatment.

These distribution assemblies can be divided into two different types: the first one is characterized in that it ensures distribution of the fluid at constant pressure and the other one is characterized in that it ensures a distribution that is proportional to the rotation rate of the engine of the agricultural vehicle with which it is associated.

In the first type, the distribution assemblies comprise in particular a maximum-pressure valve, which acts as a regulating valve, connected to the intake of the pressurized fluid, the duct for discharging the excess fluid and a duct for serving the delivery sections.

The service duct is further controlled by one or more section valves for opening and closing respective delivery ducts, which are connected to the consumption points for the distribution of the pressurized fluid.

The working pressure is regulated by means of the maximum-pressure valve, by acting on the resistance offered by the flow control element to the fluid in input, for example by means of an adjustment knob which is associated with a spring for preloading the flow control element.

The flow control element of the maximum-pressure valve in fact opens until a balance is reached between the force of the spring and the force applied by the pressure of the water.

If a delivery section is closed by a section valve, the higher flow of fluid in the other sections would cause an increase in pressure within the assembly, and this causes a wider opening of the flow control element of the maximum-pressure valve, so as to send into the discharge duct the excess quantity of flow and reestablish the balance at the established initial pressure. Therefore, the flow of water delivered by each section is always constant.

This is reflected in the distribution of the treatment fluid, since in order to have a constant distribution per unit treated surface, the speed of the agricultural distribution vehicle must also be constant.

The second type of distribution assemblies, in particular, exhibits greater versatility in use, allowing a distribution of treatment fluid per unit treated surface which is constant for a same gear engaged in the agricultural vehicle and independently of its advancement speed.

This second known type of distribution assembly, in particular, comprises a maximum-pressure valve connected to the intake of the pressurized fluid, the duct for discharge of the excess fluid and a duct for serving the delivery sections.

Moreover, the assembly comprises a regulating valve of the proportional type, the flow control element of which is kept in a preset position and maintains a fixed position regardless of pressure increases, so that the flow of fluid in input is distributed between the discharge and the service duct.

The service duct is further controlled by one or more section valves for the opening and closure with calibrated returns of respective delivery ducts connected to the consumption points for the distribution of the pressurized fluid.

The regulating valve must be set so as to have the desired pressure at the rotation rate of the engine that corresponds to the advancement speed of the agricultural vehicle with which the treatment is performed.

If this advancement speed (for an equal engaged gear) varies for any reason, thus varying the rotation rate of the engine, the (greater/lesser) flow in input, controlled by the regulating valve, would be distributed proportionally between the discharge duct and the service duct, depending on the predefined position of the flow control element.

Within a tolerance range of approximately ±20%, the flow variation is proportional to the rotation rate of the engine of the agricultural vehicle, and accordingly (for an equal engaged gear) the volume of fluid distributed per unit treated surface remains constant.

In this second type, the distribution assembly must in any case be provided with a device for compensating the closure of one or more delivery sections, since the regulating valve, by having the flow control element fixed in a preset position, does not perform automatic compensations. In particular, the compensation device, for example a bypass circuit which can be calibrated appropriately, must be adjusted so that each section valve in the closure position discharges through the bypass the same flow of fluid that would be destined for the closed section duct; in this manner, the position of each section valve is irrelevant with respect to the others.

Moreover, these distribution assemblies can have filtering elements or other devices for optimizing the treatment connected thereto.

These distribution assemblies of a known type are in any case not free from drawbacks, which include the fact that they occupy considerable space; the various valves and the filtering elements are in fact provided in bodies which are mutually separate and are designed to be assembled and connected in a modular manner and joined together by means of threaded elements which require in any case empty maneuvering spaces for fixing the various components of the distribution assembly.

This fact affects the possibility of using these distribution assemblies especially in applications in which limited space occupations of the distribution machines are required, for example, for applications of treatments for vines between the rows and the like.

Moreover, the production of assemblies suitable for the first or second type of distribution requires the construction of different bodies and therefore of the corresponding molds.

US-A-5 934 327 discloses a valve for controlling the flow of cryogenic fluid from an inlet to a pair of outlets using a pair of valve actuators. The valve prevents fluid from inadvertantly leaking of flowing back through the valve inlet using a relatively simple swing-type check valve. The valve may also filter undesirable debris from the fluid as it passes through the valve.

US-A-4 570 677 discloses a unitary multiple control valve assembly including control valves for a plurality of outlets supplied from a single fluid source combined in a single manifold. Each outlet conduit is selectively connected to an inlet conduit by an independently actuatable source valve. Each outlet conduit is also provided with an independently actuatable discharge valve and a safetly relief valve.

US-A-2 775 261 discloses a valved manifold for field spraying equipment, incliuding a manifold and an inlet port and a plurality of outlet ports for the manifold chamber. Valve seat members are mounted in each outlet port and present valve seats within the chamber, and a row of valves are mounted within the manifold and operable to close upon and open form the respective valve seat. A manually operable pivotal lever is provided for each valve.

The aim of the present invention is to eliminate the drawbacks cited above of the background art, by providing a distribution assembly for dispensing suspensions for agricultural use that makes it possible to provide a distribution assembly which is compact, has a reduced space occupation and optimizes at the same time the passages of the fluid between one component and the other of the assembly.

Within this aim, an object of the invention is to allow a plurality of uses and functions of said assembly without requiring therefore the replacement of the entire assembly.

Another object of the present invention is to provide an assembly which is simple, relatively easy to provide in practice, safe to use, effective in operation, and relatively low in costs.

In accordance with the invention, there is provided a distribution assembly for dispensing fluid for agricultural use, of the type as defined in the appended claims.

Further characteristics and advantages of the present invention will become better apparent from the following detailed description of a preferred but not exclusive embodiment of a distribution device for dispensing fluid for agricultural use, illustrated by way of non-limiting example in the accompanying drawings, wherein:
Figure 1 is a perspective view of an assembly according to the invention for the distribution of fluid at constant pressure;
Figure 2 is a perspective view of an alternative embodiment of the assembly according to the invention for the distribution of fluid that is proportional to the rotation rate of the engine;
Figure 3 is an exploded view of the assembly of Figure 1;
Figure 4 is a side sectional view of the assembly of Figure 1;
Figure 5 is a front sectional view of the assembly of Figure 1;
Figure 6 is a front sectional view of the assembly of Figure 2;
Figure 7 is a view of a detail of Figure 6;

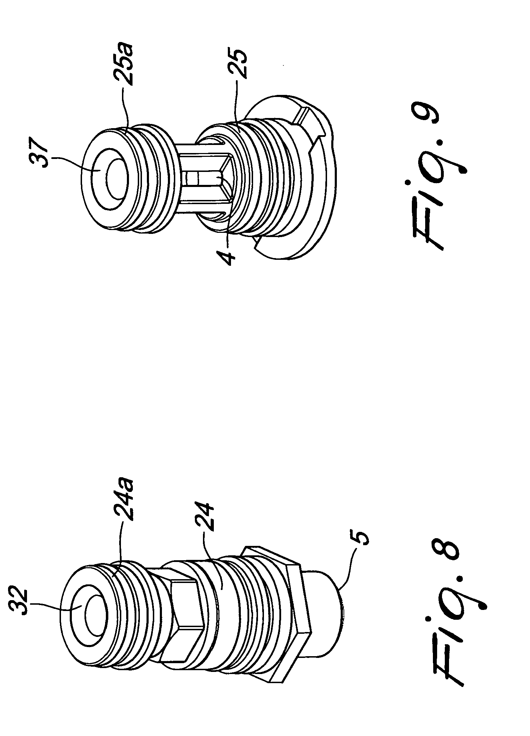

Figure 8 is a view of a detail of the delivery connector of the assembly according to the invention;
Figure 9 is a view of a detail of the discharge connector of the assembly according to the invention.

With reference to the figures, the reference numeral 1 generally designates a distribution assembly for dispensing fluid for agricultural use.

The assembly 1 comprises at least one supporting body 2, for example, which cannot be separated into several mutually independent parts and is provided with at least one intake port 3 for a pressurized fluid.

The intake port 3 is adapted to be associated with an intake duct, as is known to the person skilled in the art, which is controlled by a pump for drawing the fluid from a sump tank thereof.

The pump in turn is driven by the engine of an agricultural vehicle that is used for the distribution of the fluid and is provided for example with dispensing bars or the like.

The supporting body 2 further comprises at least one discharge port 4 for the discharge of the excess fluid, which is adapted to discharge the excess fluid into the sump tank thereof or into a separate tank.

The supporting body 2 further comprises at least one second discharge port 5 for the delivery of the fluid to at least one consumption point for dispensing it, of the type of one or more bars for dispensing the fluid which are associated with the agricultural vehicle, as is known to the person skilled in the art.

The supporting body 2 comprises a plurality of seats 6, 8a, 8b, 16 predefined therein, of which a first seat 6 is for accommodating at least one first maximum-pressure valve element 7 of the assembly 1, which is connected to the intake port 3 and at least to the first discharge port 4, and at least one pair of second seats 8a and 8b for accommodating respectively at least one pair of second valve elements, respectively 9a and 9b, for the at least partial opening and/or closure of the passage of fluid between the intake port 3 and at least one between the first discharge port 4 and the second discharge port 5.

The first valve element 7 comprises a first flow control element 10, which can move, in contrast with elastic means 11, between a configuration for closing the first discharge port 4 and a configuration for opening it, in order to open it when an adjustable limit pressure is reached within the supporting body 2 and therefore within the assembly 1.

The first valve element 7 in fact comprises means for adjusting the preloading of the elastic means 11, which comprise a threaded knob 12 associated with a valve body 13, which in turn is jointly and hermetically associated, by fastening means 14, with the supporting body 2.

The knob 12 is associated with at least one sleeve 15 provided with an abutment surface for the end of the elastic means 11 that is opposite the end in abutment against the first flow control element 10; the translational motion of the knob 12 is suitable for the compression/release of the elastic means 11 in order to vary the preloading force applied to the first flow control element 10 and therefore the adjustment of the maximum pressure within the supporting body 2.

The supporting body 2 comprises at least one third seat 16, which preferably has a fluid connection to the other seats 6, 8a, 8b for accommodating at least one filtering element 17 of the fluid in input.

The filtering element 17 comprises a filtering cartridge 18, which can be accommodated within the third seat 16.

The cartridge 18 is accommodated detachably within the third seat 16 and is kept in position by closure means, for example of the type of a cap 19, which can be screwed onto the open end of the third seat.

Sealing elements 20 of a known type are further provided which are interposed between the cartridge 18, the third seat 16 and the cap 19 at the ends of the cartridge.

The cartridge 18 comprises a perforated side wall 21, of the type of a net or the like, between the meshes of which the entering fluid passes for filtering.

Inside the cartridge 18 and coaxially thereto there is a duct 22, which is associated in fluid connection with the intake port 3 for extending it within the cartridge.

The fluid in input from the intake port 3 is in fact forced to pass between the meshes of the perforated side wall 21 of the cartridge 18 for filtering.

Advantageously, the third seat 16 and the first seat 6 run along the respective longitudinal axes which mutually intersect.

Advantageously, the supporting body 2 is a substantially monolithic body.

For example, the supporting body 2 can be provided monolithically by molding plastics or other materials; however, equivalent embodiments of the supporting body, which is for example formed by a plurality of shells assembled jointly so as to constitute a single body, are not excluded.

The supporting body 2 comprises a variety of compartments 23, 33, 48 for mutual interconnection between at least two between the intake port 3, the first discharge port 4, the second discharge port 5 and at least one of the seats 6, 8a, 8b, 16.

The supporting body 2 comprises, for example, a third interconnection compartment 23 which is interposed between the third seat 16 and the cartridge 18 for the passage of fluid from the third seat 16 and the second seats 8a, 8b and/or the first seat 6.

The assembly 1 comprises a pair of connectors 24, 25, which can be associated, in fluid connection, respectively and selectively with the first discharge port 4 or the second discharge port 5 and with at least one of the second valve elements 9a and 9b.

In particular, the connectors 24, 25 comprise at least one delivery connector 24, which can be associated with the second discharge port 5, and at least one discharge connector 25, which can be associated with the first discharge port 4.

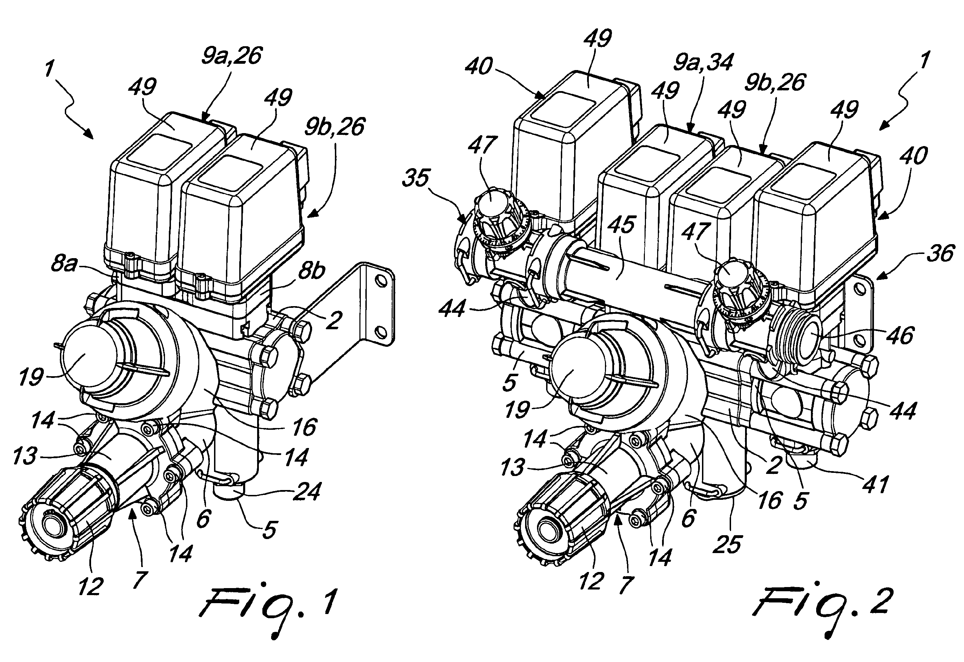

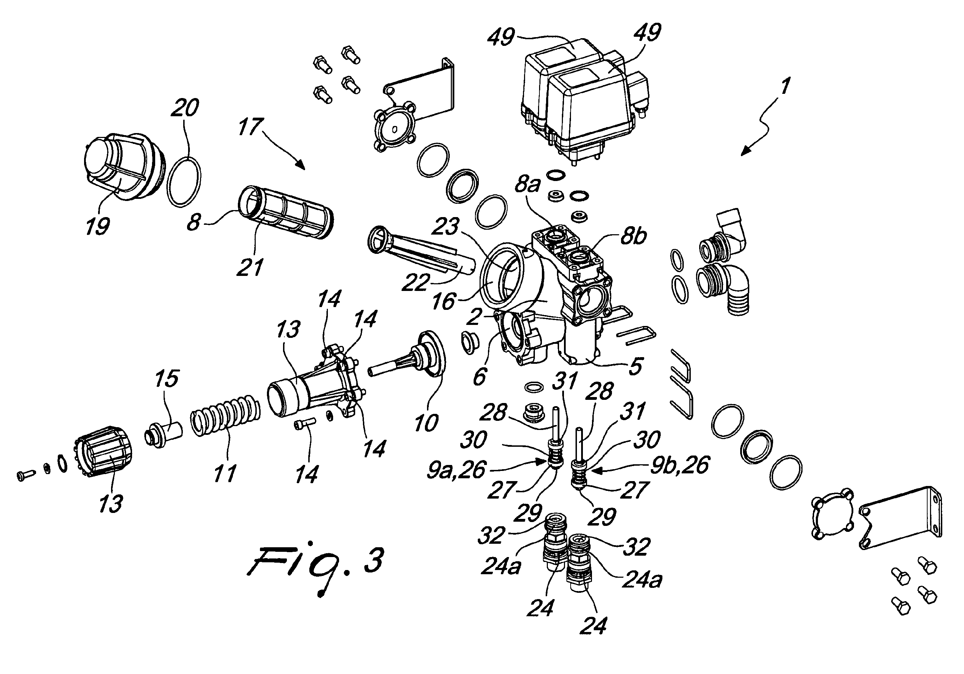

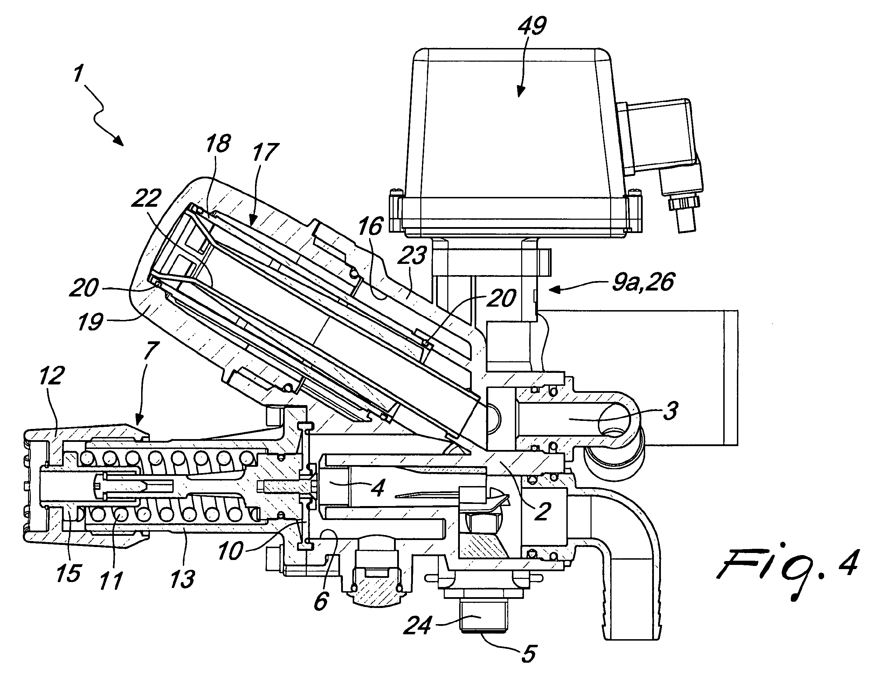

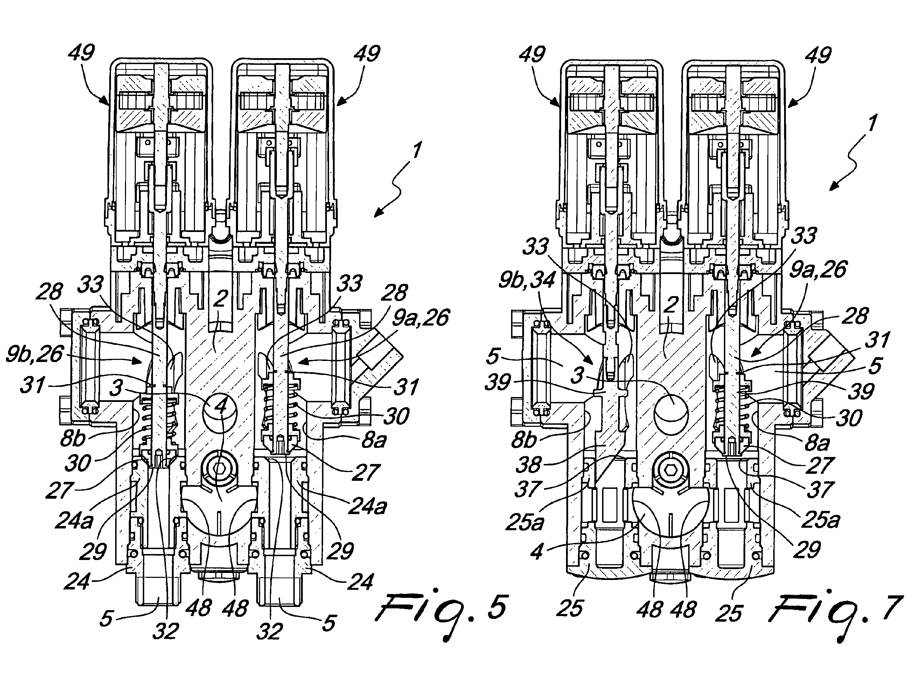

In a first embodiment, shown in Figures 1, 3-5, the assembly 1 can be used for distribution of the fluid at constant pressure.

In this first embodiment, the pair of second valve elements 9a and 9b comprises at least one pair of opening and closing valves 26, each of which is associated with the respective second discharge port 5 for the delivery of the fluid to the consumption point for distribution of the fluid at constant pressure.

In particular, each opening and closing valve 26 is associated, in fluid connection, with the respective second discharge port 5 by means of the corresponding delivery connector 24 which is jointly and hermetically associated with the supporting body 2.

Each opening and closing valve 26 comprises a second flow control element 27 for the corresponding second discharge port 5, which is associated with a stem 28, which has one end associated with the movement means and the opposite end directed toward the connector 24, 25, and which is in turn actuated with a translational motion by movement means for the opening and closing of the respective second discharge port and therefore of the intake portion 24a of the delivery connector 24.

Each second flow control element 27 is associated slidingly with the stem 28, proximately to the end thereof that is directed toward the connectors 24, 25 between a protrusion 29 provided on the end of said stem for the abutment of the second flow control element, and an elastic return element, for example a spring 30, which is locked axially by a thrust bearing ring 31, suitable to push the second flow control element toward the protrusion 29.

Each second flow control element 27 has a substantially frustum-shaped configuration and the walls of the intake portion 24a of the delivery connector 24 have a flared portion 32 which also has a complementary frustum-like shape.

The supporting body 2 comprises second compartments 33 for interconnection between the second seats 8a, 8b which are in fluid communication for the delivery of the fluid to the respective second discharge ports 5 at constant pressure.

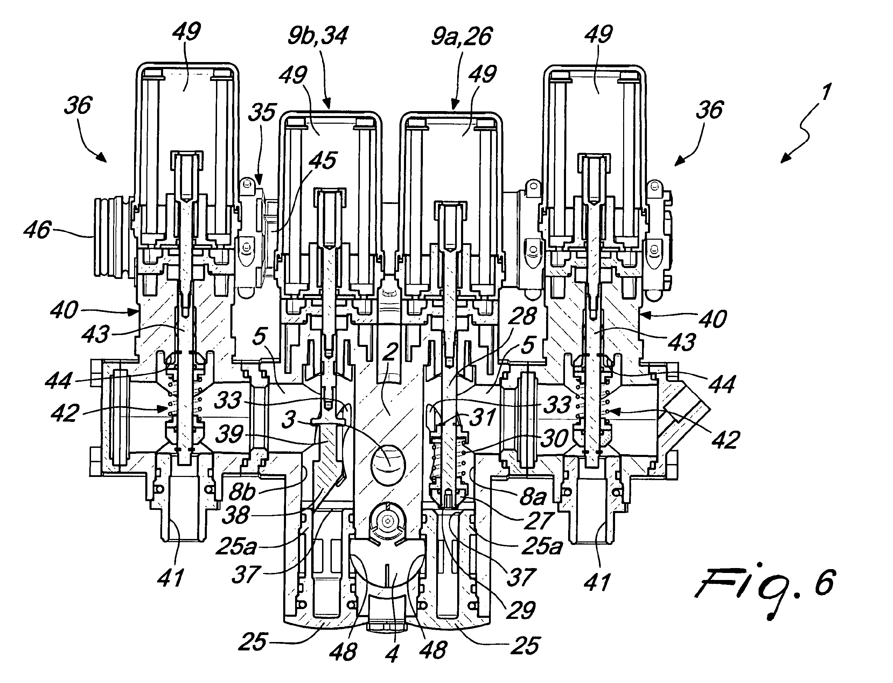

In a second and alternative embodiment, shown in Figures 2, 6 and 7, the assembly 1 can be used for the distribution of fluid which is proportional to the rotation rate of the engine of the agricultural vehicle, with an equal gear engaged therein.

In this second embodiment, the pair of second valve elements 9a and 9b comprises a valve 26 for opening and closing the first discharge port 4, of the type described above, and a proportional valve 34 for distributing the fluid in input between the first discharge port 4 and the second discharge port 5.

The second discharge port 5 is associated, in fluid connection, with at least one compensation device 35 and/or a section device 36 for the distribution of the fluid to distribute the fluid proportionally to the rotation rate of an engine for driving the pump that powers said assembly.

In particular, in this second embodiment, the opening and closing valve 6 is associated in fluid communication with the first discharge port 4 by means of a discharge connector 25, which in this case has an elbow-like configuration for redirecting the fluid toward the first discharge port and is jointly and hermetically associated with the supporting body 2.

The opening and closing valve 26 comprises a second flow control element 27 for the first discharge port 4 which is associated with the stem 28 and has one end which is associated with the movement means and the opposite end which is directed toward the connector 24, 25, which in turn is actuated for translational motion by movement means for the opening and closing of the first discharge port and therefore of the intake portion 25a of the discharge connector 25.

The second flow control element 27 is associated slidingly with the stem 28 proximately to the end thereof that is directed toward the connector 24, 25, between the protrusion 29 provided on the end of the stem for the abutment of the second flow control element and an elastic return element, for example the spring 30 that is locked axially by the thrust bearing ring 31 and is adapted to push the second flow control element toward the protrusion 29.

The second flow control element 27 is substantially frustum-shaped and the walls of the intake portion 25a of the discharge connector 25 have a concave region 37, which also has a complementary frustum shape.

The proportional valve 34 is associated in fluid communication with the first discharge port 4 by means of an additional discharge connector 25, which is jointly and hermetically associated with the supporting body 2.

The proportional valve 34 comprises a third flow control element 38 for the at least partial closing/opening of the first discharge port 5, i. e. of the intake portion 25a of the discharge connector 25, which is associated with an end of an actuation stem 39, whose opposite end is associated with movement means and which in turn is actuated with a translational motion by the movement means for the at least partial opening and closure of the first discharge port and of the second discharge port 5.

The third flow control element 38 is jointly associated with the actuation stem 39 proximately to the end thereof that lies furthest from the movement means.

The third flow control element 38 has a substantially beveled shape and can be inserted partially in the discharge connector 25 for its partial blocking/opening.

The section device 36 comprises, for example, a pair of auxiliary valves 40 for the opening and closure of respective delivery ducts 41, which are controlled by the consumption point and are associated in fluid communication with the second discharge port 5 of the supporting body 2.

The assembly 1 therefore has a pair of second discharge ports 5.

The auxiliary valves 40 are associated with the supporting body 2 at the second discharge ports 5 in fluid communication therewith.

In particular, each auxiliary valve 40 is associated in fluid communication with the respective second discharge port 5 of the assembly 1 jointly and hermetically with the supporting body 2.

Each auxiliary valve 40 is of the type with double-acting closure/opening, where the expression "double acting" refers to a valve that is suitable for the selective and/or simultaneous opening/closure of a pair of fluid passage ports.

Each auxiliary valve 40 comprises, in particular, a double-acting flow control element 42 for the respective delivery duct 41 associated with the auxiliary valve 40, which in turn is actuated for translational motion by movement means for the opening and closure of the respective delivery duct 41 and of an inflow port 44 of the compensation device 35.

The compensation device 35 comprises a bypass branch 45, which is interposed between the auxiliary valves 40 and is controlled by respective inflow ports 44 in fluid communication therewith.

The branch 45 is further provided with fluid communication, by means of an outflow port 46, with a discharge of the fluid, for example into the sump tank.

The branch 45 further comprises throttling means 47 for the at least partial opening/closure of the branch, at each inflow port 44 and the discharge of part of the fluid respectively at the closure/opening of an auxiliary valve 40.

The throttling means 47 are for example manually operated and have means for adjusting the distance of a fourth flow control element, not shown in the figure, which is at least partial, of the beveled type, from the inflow port 44 for its partial blockage/opening and the proportional distribution of the fluid in input in the branch 45 between the outflow port 46 and the branch.

In particular, the throttling means 47 are adapted to send to the discharge the flow of fluid that corresponds to the flow that would destined for a delivery duct 41, at the closure of one of them by one of the auxiliary valves 40.

The compartments 23, 33, 48 comprise at least one pair of first interconnection compartments 48, which are normally closed, between the first discharge port 4 and the second discharge port 5.

The connectors 24, 25 are mutually interchangeable selectively for the selective closure/opening of the first compartments 48 and therefore for the distribution of the fluid at a pressure that is constant or proportional to the rotation rate of an engine for driving the pump that powers the assembly.

The movement means of each second flow control element 27 and third flow control element 38, in the example shown in the figures, are of the type of a motor 49, for example an electric motor that is controlled by a control and actuation unit for the automation and management of the assembly 1 as is known to the person skilled in the art; however, the use of manual movement means, such as for example taps and the like, is not excluded.

The operation of the present invention is as follows.

In the first embodiment, for the distribution at constant pressure of the fluid that enters from the intake port 3, the fluid is pressurized in the third seat 16 and therefore passes through the meshes of the perforated side wall 21 for the filtration of the fluid.

Once filtered, it reaches the second seats 8a, 8b through the third compartments 23 and, if one or both of the opening and closure valves 26 are open, it reaches the respective second discharge port or ports 5 for the delivery thereof to the consumption points.

If both opening and closure valves 26 or one of them are kept closed, the pressure of the fluid inside the supporting body 2 increases and overcomes the resistance of the elastic means 11 of the first valve element 7, opening at least partially the first discharge port 4 in order to discharge the flow of fluid in excess and maintain the pressure inside the assembly 1 at the value that is preset by the action on the knob 12.

In the second embodiment of the assembly 1 with distribution of the fluid proportional to the rotation rate of the driving motor of the pump that powers the assembly, the fluid that enters the supporting body 2 is filtered as shown above and is sent to the second seats 8a and 8b.

In the second seats 8a and 8b, the fluid in input, whose flow-rate in input depends on the rotation rate of the motor that drives the pump which supplies the assembly, is distributed proportionally between the discharge (excess fraction) and the delivery ducts 41 by means of the proportional valve, the third flow control element 38 of which is kept in a preset position and maintains a fixed position regardless of pressure increases.

This entails a distribution of treatment fluid per unit treated surface that is substantially constant, for an equal gear engaged in the agricultural vehicle, and is independent of its travel speed.

The first maximum-pressure valve element 7 acts as a safety valve, opening only in conditions of excess pressure caused by blockages, jammings and the like.

The proportional valve 34 must be regulated so as to have the desired pressure at the rotation rate of the engine that corresponds to the travel speed of the agricultural vehicle at which the treatment is performed.

If this travel speed (for an equal engaged gear) varies, the greater or lesser flow in input, controlled by the proportional valve 34, is distributed proportionally between the first discharge port and the delivery ducts 41, according to the predefined position of the flow control element.

Within a tolerance range of approximately ±20%, the flow-rate variation is proportional to the rotation rate of the engine of the agricultural vehicle, and accordingly (for an equal engaged gear) the volume of fluid that is distributed per unit treated surface remains constant.

The device 35 for compensating the closure of one or more of the delivery ducts 41 is adjusted with the throttling means 47 so that each auxiliary valve 40, in the closed position, sends the same flow-rate of fluid that would be destined for the closed delivery duct 41 to the discharge through the bypass branch 45; in this manner, the position of each said auxiliary valve is irrelevant with respect to the others.

Moreover, advantageously, whenever the first maximum-pressure valve element 7 is opened to discharge the excess fluid, the partial vacuum that is created within the assembly 1 and the motion of the fluid from the third seat 16 toward the first discharge port 4 contribute to cleaning of the internal surface of the filtering cartridge 18 and therefore of the perforated side wall 21, applying an action that cleans the filtering element.

In practice it has been found that the described invention achieves the intended aim and objects, and in particular the fact is stressed that the supporting body that cannot be separated into a plurality of mutually independent parts makes it possible to provide a compact distribution assembly that has a limited space occupation and at the same time optimizes the passages of the fluid between one component and the other of the assembly.

Further, the assembly according to the invention allows a plurality of uses and functions of the assembly, for example for distribution at a pressure which is constant or proportional to the rotation rate of the engine that drives the pump which supplies said assembly, without therefore requiring the replacement of the entire assembly; at the same time, it is noted that the invention thus provided has a structure which is simple, relatively easy to provide in practice, safe to use and effective in operation.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A distribution assembly (1) for dispensing fluid for agricultural use, comprising at least one supporting body (2) provided with at least one intake port (3) for a pressurized fluid, at least one first discharge port (4) for the discharge of excess fluid, and at least one second discharge port (5) for the delivery of said fluid to at least one consumption point for dispensing it; said supporting body comprising a plurality of predefined seats (6, 8a, 8b, 16), a first (6) of which is for accommodation of at least one first maximum-pressure valve element (7) of the assembly which is connected to said intake port (3) and at least to said first discharge port (4), at least one pair of second seats (8a, 8b) for accommodating respectively at least one pair of second valve elements (9a, 9b) for the at least partial opening and/or closure of the passage of fluid between said intake port (3) and at least one between said first discharge port (4) and said second discharge port (5), said supporting body (2) further comprising a plurality of compartments (23, 33, 48) for mutual interconnection between at least two among said intake port (3), said first discharge port (4) and said second discharge port (5) and at least one of said seats (6, 8a, 8b, 16), said compartments (23, 33, 48) comprising at least one pair of first compartments (48) for interconnection between said first discharge port (4) and said second discharge port (5), the assembly (1) being **characterized in that** it further comprises two pairs of connectors (24, 25), which can be associated, in fluid communication, respectively and selectively with said first discharge port (4) or with said second discharge port (5) and with at least one of said second valve elements (9a, 9b), said connectors (24, 25), for the selective closure/opening of said first compartments (48), being mutually interchangeable selectively for the distribution of said fluid at a pressure that is constant or proportional to the rotation rate of a motor for driving a pump that supplies said assembly.

2. The assembly (1) according to claim 1, **characterized in that** it comprises at least one third seat (16) for accommodating at least one filtering element (17) for said fluid in input.

3. The assembly (1) according to one or more of the preceding claims, **characterized in that** said supporting body (2) is a substantially monolithic body.

4. The assembly (1) according to one or more of the preceding claims, **characterized in that** said pair of said second valve elements (9a, 9b) comprises at least one pair of opening and closing valves (26), each of which is associated with a respective said second discharge port (5) for the delivery of said fluid to said consumption point (for distribution of said fluid at constant pressure).

5. The assembly (1) according to one or more of the preceding claims, **characterized in that** said pair of said second valve elements (9a, 9b) comprises at least one valve (26) for opening and closing said first discharge port (4) and at least one proportional valve (40) for distributing said fluid between said first discharge port (4) and said second discharge port (5), said second discharge port (5) being associable, in fluid communication, with at least one compensation device (35) and/or a section device (36) of the distribution of said fluid (for distribution of said fluid which is proportional to the rotation rate of a motor that drives the pump which supplies said assembly).

## Patentansprüche

1. Eine Verteilungsanordnung (1) zur Abgabe eines Fluids für den landwirtschaftlichen Gebrauch, der Folgendes umfasst: mindestens einen tragenden Körper (2), versehen mit mindestens einer Einlassöffnung (3) für ein unter Druck gesetztes Fluid, mindestens einer ersten Ablassöffnung (4) für das Ablassen von überschüssigem Fluid und mindestens einer zweiten Ablassöffnung (5) für die Abgabe des Fluids an mindestens eine Verbrauchsstelle für seine Abgabe, wobei der tragende Körper eine Vielzahl vordefinierter Sitze (6, 8a, 8b, 16) umfasst, von denen ein erster (6) zur Aufnahme mindestens eines ersten Maximaldruck-Ventilelements (7) der Anordnung dient, das mit der Einlassöffnung (3) und das mindestens mit der ersten Ablassöffnung (4) verbunden ist, mindestens ein Paar zweiter Sitze (8a, 8b) zur jeweiligen Aufnahme von mindestens einem Paar zweiter Ventilelemente (9a, 9b) zum zumindest partiellen Öffnen und/oder Verschließen des Fluiddurchlasses zwischen der Einlassöffnung (3) und mindestens einer zwischen der ersten Ablassöffnung (4) und der zweiten Ablassöffnung (5), wobei der tragende Körper (2) weiter eine Vielzahl von Kammern (23, 33, 48) zur wechselseitigen Verbindung mindestens zweier der Einlassöffnung (3), der ersten Ablassöffnung (4) und der zweiten Ablassöffnung (5) und mindestens eines der Sitze (6, 8a, 8b, 16) miteinander umfasst, wobei die Kammern (23, 33, 48) mindestens ein Paar erster Kammern (48) zur Verbindung der ersten Ablassöffnung (4) und der zweiten Ablassöffnung (5) miteinander umfassen, wobei die Anordnung (1) **dadurch gekennzeichnet ist, dass** sie weiter zwei Paare von Anschlüssen (24, 25) umfasst, die in Fluidaustausch jeweils und selektiv mit der ersten Ablassöffnung (4) oder mit der zweiten Ablassöffnung (5) und mit mindestens einem der zweiten Ventilelemente (9a, 9b) assoziiert werden können, wobei die Anschlüsse (24, 25) zum selektiven Verschließen/Öffnen der ersten Kammern (48) selektiv wechselseitig austauschbar sind für die Verteilung des Fluids mit einem Druck, der konstant oder proportional zur Rotationsgeschwindigkeit eines Motors für den Antrieb einer Pumpe ist, die die Anordnung versorgt.

2. Die Anordnung (1) gemäß Anspruch 1, **dadurch** gekennzeichnen, dass sie mindestens einen dritten Sitz (16) zur Aufnahme mindestens eines Filterelements (17) für das eingelassene Fluid umfasst.

3. Die Anordnung (1) gemäß einem oder mehreren der obigen Ansprüche, **dadurch gekennzeichnet, dass** der tragende Körper (2) ein im Wesentlichen einteiliger Körper ist.

4. Die Anordnung (1) gemäß einem oder mehreren der obigen Ansprüche, **dadurch gekennzeichnet, dass** das Paar der zweiten Ventilelemente (9a, 9b) mindestens ein Paar sich öffnender und schließender Ventile (26) umfasst, von denen jedes mit einer entsprechenden zweiten Ablassöffnung (5) für die Abgabe des Fluids an die Verbrauchsstelle assoziiert ist (für die Verteilung des Fluids mit konstantem Druck).

5. Die Anordnung (1) gemäß einem oder mehreren der obigen Ansprüche, **dadurch** gekenntzeichnet, dass das Paar der zweiten Ventilelemente (9a, 9b) mindestens ein Ventil (26) zum Öffnen und Schließen der ersten Ablassöffnung (4) und mindestens ein Propotionalventil (40) zur Verteilung des Fluids zwischen der ersten Ablassöffnung (4) und der zweiten Ablassöffnung (5) umfasst, wobei die zweite Ablassöffnung (5) in Fluidaustausch mit mindestens einer Ausgleichseinrichtung (35) und/oder mit einer Strecken-Vorrichtung (36) der Verteilung des Fluids assoziiert werden kann (für eine Verteilung des Fluids, die proportional zur Rotationsgeschwindigkeit eines Motors ist, der die Pumpe antreibt, welche die Anordnung versorgt).

## Revendications

1. Ensemble de répartition (1) permettant de distribuer un fluide pour une utilisation agricole, comprenant au moins un corps de support (2) pourvu d'au moins une lumière d'admission (3) pour un fluide sous pression, au moins une première lumière d'évacuation (4) pour évacuer l'excédent de fluide, et au moins une seconde lumière d'évacuation (5) pour délivrer ledit fluide à au moins un point de consommation pour sa distribution ; ledit corps de support comprenant une pluralité d'assises prédéfinies (6, 8a, 8b, 16), une première (6) desquelles sert à loger au moins un premier élément de soupape de pression maximale (7) de l'ensemble qui est raccordé à ladite lumière d'admission (3) et au moins à la première lumière d'évacuation (4), au moins une paire de deuxièmes assises (8a, 8b) permettant de loger respectivement une paire de seconds éléments de soupape (9a, 9b) pour l'ouverture et/ou la fermeture au moins partielle du passage de fluide entre ladite lumière d'admission (3) et au moins l'un entre ladite première lumière d'évacuation (4) et ladite seconde lumière d'évacuation (5), ledit corps de support (2) comprenant en outre une pluralité de compartiments (23, 33, 48) pour une interconnexion mutuelle entre au moins deux parmi ladite lumière d'admission (3), ladite première lumière d'évacuation (4) et ladite seconde lumière d'évacuation (5) et au moins une desdites assises (6, 8a, 8b, 16), lesdits compartiments (23, 33, 48) comprenant au moins une paire de premiers compartiments (48) pour l'interconnexion entre ladite première lumière d'évacuation (4) et ladite seconde lumière d'évacuation (5), l'ensemble (1) étant **caractérisé en ce qu'**il comprend en outre deux paires de connecteurs (24, 25), qui peuvent être associés, en communication fluidique, respectivement et sélectivement avec ladite première lumière d'évacuation (4) ou avec ladite seconde lumière d'évacuation (5) et avec au moins un desdits seconds éléments de soupape (9a, 9b), lesdits connecteurs (24, 25) pour l'ouverture/la fermeture sélective desdits premiers compartiments (48), étant mutuellement interchangeables sélectivement pour la répartition dudit fluide à une pression qui est constante ou proportionnelle à la vitesse de rotation d'un moteur pour entraîner une pompe qui alimente ledit ensemble.

2. Ensemble (1) selon la revendication 1, **caractérisé en ce qu'**il comprend au moins une troisième assise (16) permettant de loger au moins un élément filtrant (17) pour ledit fluide en entrée.

3. Ensemble (1) selon une ou plusieurs des revendications précédentes, **caractérisé en ce que** ledit corps de support (2) est un corps sensiblement monolithique.

4. Ensemble (1) selon une ou plusieurs des revendications précédentes, **caractérisé en ce que** ladite paire desdits seconds éléments de soupape (9a, 9b) comprend au moins une paire de soupapes d'ouverture et de fermeture (26), dont chacune est associée à une dite seconde lumière d'évacuation respective (5) pour délivrer ledit fluide audit point de consommation (pour la répartition dudit fluide à pression constante).

5. Ensemble (1) selon une ou plusieurs des revendications précédentes, **caractérisé en ce que** ladite paire desdits seconds éléments de soupape (9a, 9b) comprend au moins une soupape (26) pour ouvrir et fermer ladite lumière d'évacuation (4) et au moins une soupape proportionnelle (40) pour répartir ledit fluide entre ladite première lumière d'évacuation (4) et ladite seconde lumière d'évacuation (5), ladite seconde lumière d'évacuation (5) pouvant être associée, en communication fluidique, à au moins un dispositif de compensation (35) et/ou un dispositif de section (36) de la répartition dudit fluide (pour la répartition dudit fluide qui est proportionnelle à la vitesse de rotation d'un moteur qui entraîne la pompe qui alimente ledit ensemble).
